# EUROPÄISCHE PATENTSCHRIFT

(11) **EP 2 307 118 B1**
(45) Veröffentlichungstag und Bekanntmachung des Hinweises auf die Patenterteilung: **06.08.2014**
(21) Anmeldenummer: 09780317.5
(22) Anmeldetag: 08.07.2009
(51) Int. Cl.: B01D 29/11, B01D 46/24, B01D 46/00

(54) **FILTERANORDNUNG ZUM FILTERN EINES FLÜSSIGEN ODER GASFÖRMIGEN MEDIUMS**
FILTER ARRANGEMENT FOR FILTERING A LIQUID OR GASEOUS MEDIUM
SYSTÈME DE FILTRE POUR FILTRER UN FLUIDE LIQUIDE OU GAZEUX

(30) Priorität: 10.07.2008 DE 102008040319
(43) Veröffentlichungstag der Anmeldung: 13.04.2011
(73) Patentinhaber: Deere & Company, Moline, IL 61265-8098 (US)
(72) Erfinder: HUBER, Nicolás, 67819 Kriegsfeld (DE)
(74) Vertreter: Dehnhardt, Florian Christopher
(86) Internationale Anmeldenummer: PCT/EP2009/058670
(87) Internationale Veröffentlichungsnummer: WO 2010/003980

(56) Entgegenhaltungen:
- EP-A- 1 281 426
- EP-A- 1 693 097
- DE-A1- 19 644 646
- US-B1- 6 481 580

## Beschreibung

Die Erfindung betrifft eine Filteranordnung zum Filtern eines flüssigen oder gasförmigen Mediums, mit einem Filtergehäuse zur Aufnahme eines auswechselbaren Filtereinsatzes, wobei das Filtergehäuse einen Gehäusekopf und einen mittels eines Verbindungselements mit dem Gehäusekopf lösbar verbindbaren Gehäusedeckel aufweist. Des Weiteren betrifft die Erfindung einen Filtereinsatz zur Verwendung in einer Filteranordnung der eingangs genannten Art, ein Verfahren zum Entriegeln eines Verbindungselements einer derartigen Filteranordnung, sowie deren Verwendung in einem Kraftfahrzeug, insbesondere einem landwsrtsahaftlichen Kraftfahrzeug.

Filter zum Reinigen von flüssigen oder gasförmigen Medien in Kraftfahrzeugen werden in den unterschiedlichsten Ausführungen, beispielsweise als Ölfilter zum Betreiben eines Verbrennungsmotors, eingesetzt. Um eine gleichbleibende Schmierung des Verbrennungsmotors zu gewährleisten, werden verbrannte Anteile des Öls, Metallabrieb und sonstige Verunreinigungen mittels eines geeigneten Ölfilters herausgefiltert. Der Ölfilter befindet sich hierzu in einem mit dem Verbrennungemotor in Verbindung stehenden Ölversorgungskreislauf.

Die Druckschrift DE 100 46 494 A1 offenbart in diesem Zusammenhang eine Filteranordnung zum Filtern insbesondere von Öl zur Schmierung einer Brennkraftmaschine eines Kraftfahrzeugs. Die Filteranordnung besteht aus einem Filtergehäuse, einem Filterdeckel sowie einem in dem Filtergehäuse angeordneten Filtereinsatz. Der Filterdeckel lässt sich mittels einer Schraubverbindung mit dem Filtergehäuse flüssigkeitsdicht verbinden, wobei sich durch Abschrauben des Filterdeckels der Filtereinsatz bei Bedarf austauschen lässt.

Die EP 1 693 097 A1 betrifft ein Filtersystem für ein Fluid, mit einem becherförmige Gehäuse, einem lösbar darin angeordneten Filterelement und einem Aufnahmekopf, wobei das becherförmige Gehäuse durch eine Mittel zur lösbaren Verbindung mit dem Aufnahmekopf verbunden ist, derart, dass die Verbindung mit dem Aufnahmekopf nur durch die Kombination von becherförmigen Gehäuse mit dem Filterelement ermöglicht wird.

Die DE 196 44 646 A1 zeigt ein Filtersystem mit einem Gehäuse und einem Deckel, wobei das Gehäuse mit einem Sicherungselement versehen ist, das ein Verschließen des Gehäuses mit dem Deckel bei fehlendem Filtereinsatz verhindert.

Der im Allgemeinen als Wegwerfartikel konzipierte Filtereinsatz weist als filteraktives Element eine zickzackförmig gefaltete, offenporige Papiermembran auf, durch die das zu filternde Öl beim Betrieb des Kraftfahrzeugs hindurchtritt. Da sich die Oberfläche der Papiermembran im Laufe der Zeit mit Verunreinigungen zusetzt, ist zur Vermeidung einer Beeinträchtigung der Durchfluss- bzw. Filterleistung im Rahmen von Wartungsarbeiten ein regelmäßiger Austausch des Filtereinsatzes erforderlich. Der gebrauchte Filtereinsatz wird in diesem Fall entsorgt und gegen einen neuen ausgetauscht.

Wird bei derartigen Wartungsarbeiten der Filtereinsatz dem Filtergehäuse entnommen, jedoch der Einbau eines neuen Filtereinsatzes vergessen und in der Folge die Filteranordnung.bei fehlendem Filtereinsatz betrieben, so besteht die Möglichkeit, dass unbemerkt verunreinigtes Öl in die mit der Filteranordnung verbundenen Aggregate des Kraftfahrzeugs gelangen kann.

Es ist daher Aufgabe der vorliegenden Erfindung, eine Filteranordnung der eingangs genannten Art derart weiterzubilden, dass ein versehentlicher Betrieb bei fehlendem Filtereinsatz verhindert oder zumindest erschwert werden kann.

Diese Aufgabe wird gemäß den Merkmalen des Patentanspruchs 1 gelöst.

Die erfindungsgemäße Filteranordnung zum Filtern eines flüssigen oder gasförmigen Mediums umfasst ein Filtergehäuse zur Aufnahme eines auswechselbaren Filtereinsatzes, wobei das Filtergehäuse einen Gehäusekopf und einen mittels eines Verbindungselements mit dem Gehäusekopf lösbar verbindbaren Gehäusedeckel aufweist. Das Verbindungselement wirkt derart mit einem dem Gehäusekopf zugeordneten Verriegelungselement zusammen, dass der Gehäusedeckel mit dem Gehäusekopf ausschließlich dann zum Zwecke des Zusammenbaus verbindbar ist, wenn sich ein Filtereinsatz in dem Filtergehäuse befindet.

Ein Zusammenbau des Filtergehäuses und damit ein versehentlicher Betrieb der Filteranordnung bei fehlendem Filtereinsatz ist demnach nicht möglich.

Bei der Filteranordnung handelt es sich beispielsweise um einen Ölfilter, einen Kraftstofffilter oder einen Hydraulikflüssigkeitsfilter eines Kraftfahrzeugs. Die Filteranordnung kann jedoch auch zum Filtern jeder beliebigen anderen Betriebsflüssigkeit des Kraftfahrzeugs oder zur Reinigung gasförmiger Medien, beispielsweise zur Verwendung als Luftfilter oder dergleichen, dienen.

Hierbei ist die Filteranordnung zur Verwendung in Kraftfahrzeugen beliebiger Bauart geeignet, insbesondere in landwirtschaftlichen Kraftfahrzeugen, wie Traktoren, Erntemaschinen, Mähmaschinen oder dergleichen.

Vorteilhafte Ausführungen der erfindungsgemäßen Filteranordnung gehen aus den Unteransprüchen hervor.

Das Verriegelungselement umfasst insbesondere ein Sperrelement, das bei Fehlen des Filtereinsatzes im Filtergehäuse eine vorgegebene Sperrposition einnimmt, wobei das Sperrelement in der vorgegebenen Sperrposition einen Zusammenbau des Filtergehäuses blockiert.

Befindet sich ein Filtereinsatz in dem Filtergehäuse, so nimmt das Sperrelement eine von der vorgegebenen Sperrposition abweichende Freigabeposition ein, in der die Blockierung des Verbindungselements aufgehoben und ein Zusammenbau des Filtergehäuses möglich ist.

Das Sperrelement ist vorzugsweise Bestandteil eines mechanischen Verriegelungselements. Es ist aber auch vorstellbar, dass das Sperrelement Bestandteil eines elektrischen und/oder elektromechanischen Verriegelungselements ist. Das Verriegelungselement kann in diesem Fall ein elektrisches und/oder elektromechanisches Betätigungselement aufweisen, mittels dessen sich das Sperrelement zwischen der vorgegebenen Sperrposition und der Freigabeposition überführen lässt.

Der Vorteil eines mechanischen, d.h. unter Verwendung ausschließlich mechanischer Komponenten ausgebildeten Verriegelungselements besteht darin, dass dessen Funktion stromlos und damit unabhängig von einer Stromversorgung des Kraftfahrzeugs erfolgen kann.

Der Gehäusekopf umfasst insbesondere einen Anschlussstutzen zur Herstellung einer lösbaren Druckverbindung mit dem Filtereinsatz, wobei das Sperrelement aus der vorgegebenen Sperrposition in die Freigabeposition überführt wird, wenn die Druckverbindung zwischen Filtereinsatz und Anschlussstutzen hergestellt wird.

Andererseits kehrt das Sperrelement beim Lösen der Druckverbindung zwischen Filtereinsatz und Anschlussstutzen unter der Wirkung einer von dem Verriegelungselement ausgeübten rückstellenden Kraft selbsttätig, insbesondere unabhängig von einer jeweiligen Einbaulage der Filteranordnung im Kraftfahrzeug, aus der Freigabeposition in die vorgegebene Sperrposition zurück. Die rückstellende Kraft wird beispielsweise von einem mit dem Sperrelement zusammenwirkenden federelastischen Rückstellmittel ausgeübt, das Bestandteil des Verriegelungsmittels ist.

Des Weiteren ist es möglich, dass das Verriegelungselement ein Betätigungselement umfasst, wobei der Filtereinsatz mit dem Betätigungselement derart in Anlage gebracht wird, dass das mit dem Betätigungselement in Verbindung stehende Sperrelement bei Herstellung der Druckverbindung zwischen Filtereinsatz und Anschlussstutzen entgegen der Wirkung der rückstellenden Kraft des federelastischen Rückstellmittels aus der vorgegebenen Sperrposition in die Freigabeposition überführt wird.

Der Anschlussstutzen des Gehäusekopfs kann zugleich die Funktion einer Zuleitung des zu filternden flüssigen oder gasförmigen Mediums oder - je nach Anwendungsfall - einer Ableitung des gefilterten flüssigen oder gasförmigen Mediums übernehmen, wozu sich der Anschlussstutzen über einen an dem Filtereinsatz ausgebildeten Anschlussflansch druckdicht mit dem Filtereinsatz verbinden lässt. Die Herstellung der Druckverbindung kann beispielsweise mittels eines Schraubgewindes oder durch Verwendung einer Steckkupplung erfolgen.

Bei dem zwischen Gehäusekopf und Gehäusedeckel vorgesehenen Verbindungselement handelt es sich vorzugsweise um ein Schraubgewinde. Das Schraubgewinde ist insbesondere als Feingewinde ausgebildet. Ein freies Ende des Sperrelements ist in der vorgegebenen Sperrposition derart gegenüber einem an dem Gehäusekopf ausgebildeten Innengewinde bzw. gegenüber einem Abschnitt des Innengewindes positioniert, dass ein Zusammenschrauben des Filtergehäuses blockiert wird. Das Sperrelement weist dabei insbesondere die Gestalt eines Sperrarms auf.

Genauer gesagt verdeckt das Sperrelement wenigstens einen Teil der Gewindegänge des Innengewindes des Gehäusekopfs, sodass eine Eingriffnahme seitens eines an dem Gehäusedeckel ausgebildeten Gegengewindes bzw. Außengewindes nicht möglich ist. Der Gehäusedeckel lässt sich in diesem Fall beim Versuch des Zusammenbaus des Filtergehäuses nicht auf den Gehäusekopf aufschrauben. Dabei kann das freie Ende des Sperrelements entweder unmittelbar, insbesondere mit einer vorgegebenen Anpresskraft, auf den Gewindegängen des Innengewindes aufliegen oder aber eine davon beabstandete Position aufweisen.

Das Betätigungselement bildet vorzugsweise eine in das Innere des Gehäusekopfs hineinragende Verlängerung, die bei Herstellung der Druckverbindung zwischen Filtereinsatz und Anschlussstutzen derart an dem Filtereinsatz zur Anlage kommt, dass das Sperrelement unter Freigabe des an dem Gehäusekopf ausgebildeten Innengewindes mitgeführt wird. Das Betätigungselement weist dabei insbesondere die Gestalt eines Betätigungsarms auf.

Das Betätigungselement kann ferner gabelförmig ausgebildet sein. Zusätzlich oder alternativ besteht die Möglichkeit, dass das Betätigungselement ein freies Ende mit einem umbördelten Randbereich zur Anlage an dem Filtereinsatz aufweist. In beiden Fällen ergibt sich eine vergrößerte Anlagefläche zwischen Betätigungselement und Filtereinsatz. Eine mögliche Beschädigung des Filtereinsatzes kann so vermieden werden.

Das Filtergehäuse ist vorzugsweise zur Aufnahme eines zylindrischen Filtereinsatzes ausgebildet. In diesem Fall kann eine Vielzahl von Verriegelungselementen entlang eines zylindrischen Innenumfangs des Gehäusekopfs verteilt angeordnet sein. Die Verriegelungselemente können insbesondere eine gleichmäßige Verteilung aufweisen. Je nach Außendurchmesser des Filtereinsatzes und des sich daraus ergebenden Innenumfangs des Gehäusekopfs können zwischen drei und sieben Verriegelungselemente vorgesehen sein.

Das Verriegelungselement kann einstückiger Bestandteil eines aus federelastischem Material ausgebildeten Trägerelements sein. Bei dem federelastischen Material handelt es sich typischerweise um einen rostfreien oder in vergleichbarer Weise oberflächenbehandelten Federstahl. Insbesondere wird das Verriegelungselement durch Ausstanzen und anschließendes Prägen eines zusammenhängenden Materialstücks hergestellt. Das Betätigungselement bildet in diesem Fall ein blattfederartiges, mithin federelastisches Rückstellmittel aus, dessen entspannter Zustand der vorgegebenen Sperrposition des Sperrelements entspricht.

Das Trägerelement lässt sich unter Vorspannung in einer am Innenumfang des Gehäusekopfs ausgebildeten Nut aufnehmen. Zusätzliche Befestigungsmittel, wie Schrauben, Nieten oder eine Verschweißung, erübrigen sich in diesem Fall.

Der Gehäusekopf der Filteranordnung ist in der Regel fahrzeugfest angeordnet und weist einen Einlass zur Zuleitung und einen Auslass zur Ableitung des zu filternden bzw. des gefilterten flüssigen oder gasförmigen Mediums auf. Die Filteranordnung befindet sich vorzugsweise in einem Motorraum des Kraftfahrzeugs, sodass diese bei Wartungsarbeiten zum Zwecke des Austauschs des Filtereinsatzes problemlos erreichbar ist.

Um das Abnehmen des Gehäusedeckels und damit den Austausch des Filtereinsatzes zu erleichtern, kann der Gehäusedeckel ein Demontagemittel, beispielsweise eine gerändelte Grifffläche und/oder einen Mehrkantbolzen zur Ineingriffnahme eines Demontagewerkzeugs aufweisen. Das Demontagemittel vereinfacht zugleich einen Zusammenbau des Filtergehäuses nach erfolgtem Austausch des Filtereinsatzes.

Das Filtergehäuse ist beispielsweise aus Metall oder einem geeigneten Kunststoff im Spritzgussverfahren hergestellt.

Um einen Betrieb der Filteranordnung mit einem ungeeigneten Filtereinsatz zu verhindern bzw. zumindest zu erschweren, besteht die Möglichkeit, dass der Filtereinsatz ein erstes Sicherheitsmerkmal umfasst, das mit einem dem Filterkopf zugeordneten zweiten Sicherheitsmerkmal derart zusammenwirkt, dass sich das Filtergehäuse ausschließlich dann zusammenbauen lässt, wenn das erste und das zweite Sicherheitsmerkmal miteinander korrespondierende mechanische Eigenschaften aufweisen.

Die erfindungsgemäße Filteranordnung wird im Folgenden anhand der beigefügten Zeichnungen näher erläutert, wobei übereinstimmende Bezugszeichen identische oder zumindest funktionsgleiche Komponenten bezeichnen. Dabei zeigen:
- Fig. 1a: eine Querschnittsansicht einer erfindungsgemäßen Filteranordnung zur Aufnahme eines - im vorliegenden Fall fehlenden - Filtereinsatzes,
- Fig. 1b: eine Detailansicht der in Fig. 1a wiedergegebenen erfindungsgemäßen Filteranordnung,
- Fig. 2: eine Draufsicht auf das Innere eines Gehäusekopfs der erfindungsgemäßen Filteranordnung bei abgenommenem Gehäusedeckel,
- Fig. 3a: eine Querschnittsansicht der erfindungsgemäßen Filteranordnung mit einem darin befindlichen Filtereinsatz,
- Fig. 3b: eine Detailansicht der in Fig. 3a wiedergegebenen erfindungsgemäßen Filteranordnung vor dem Aufschrauben des Gehäusedeckels auf den Gehäusekopf, und
- Fig. 3c: eine Detailansicht der in Fig. 3a wiedergegebenen erfindungsgemäßen Filteranordnung bei vollständig auf dem Gehäusekopf aufgeschraubtem Gehäusedeckel.

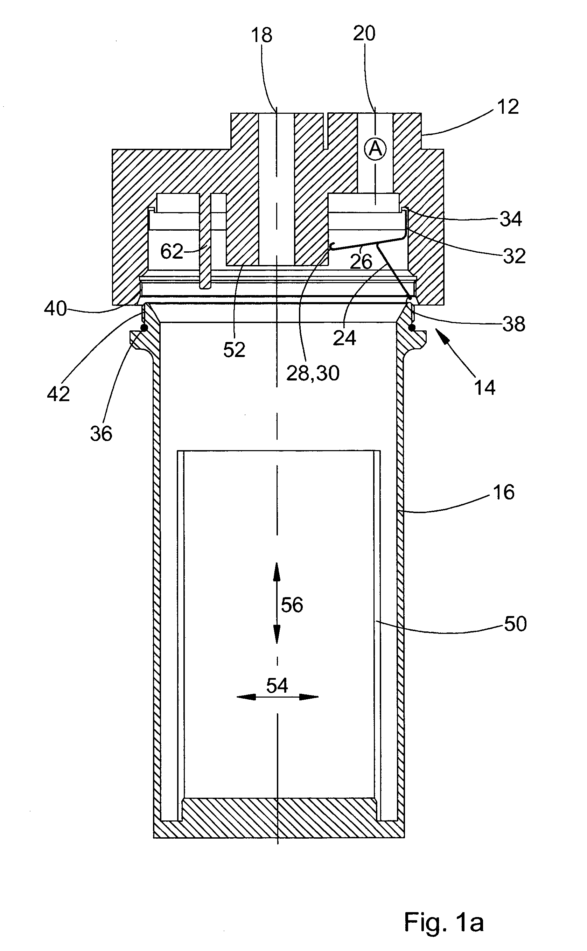

Fig. 1a zeigt eine Querschnittsansicht einer erfindungsgemäßen Filteranordnung zur Aufnahme eines - im vorliegenden Fall fehlenden - Filtereinsatzes.

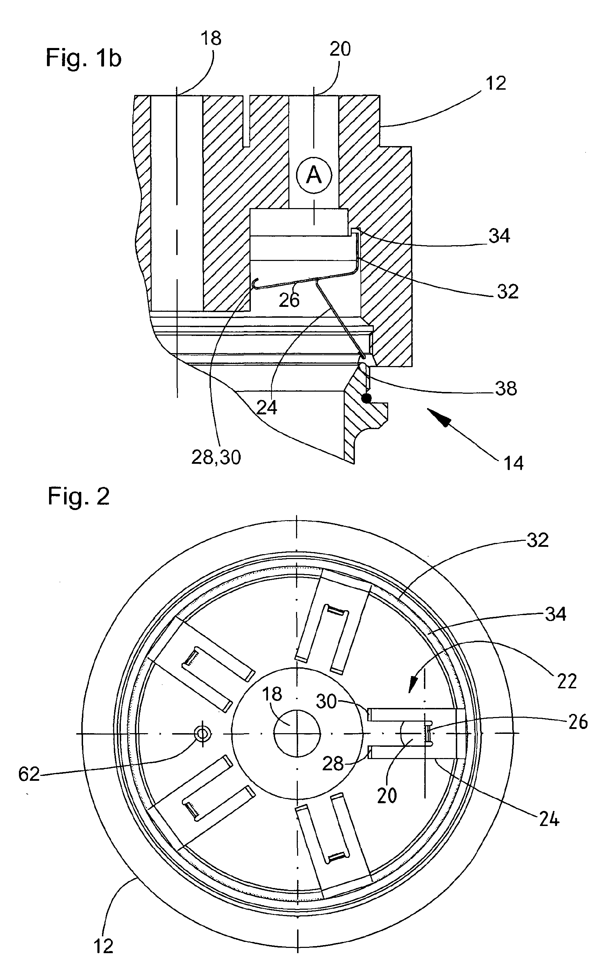

Des Weiteren zeigt Fig. 1b eine Detailansicht der in Fig. 1a wiedergegebenen erfindungsgemäßen Filteranordnung.

Die Filteranordnung ist beispielsgemäß als Ölfilter eines Verbrennungsmotors eines nicht dargestellten landwirtschaftlichen Kraftfahrzeugs ausgebildet, kann jedoch auch zum Filtern jeder beliebigen anderen Betriebsflüssigkeit des Kraftfahrzeugs dienen, beispielsweise eines zum Betreiben des Verbrennungsmotors vorgesehenen Kraftstoffs oder einer zur Ansteuerung von Zusatzaggregaten des Kraftfahrzeugs verwendeten Hydraulikflüssigkeit. Alternativ ist auch eine Verwendung als Luftfilter oder dergleichen vorstellbar.

Bei dem landwirtschaftlichen Kraftfahrzeug handelt es sich beispielsweise um einen Traktor, eine Erntemaschine, eine Mähmaschine oder dergleichen.

Die Filteranordnung befindet sich vorzugsweise in einem nicht dargestellten Motorraum des Kraftfahrzeugs, insbesondere im Bereich einer dem Verbrennungsmotor zugeordneten Ölwanne. Die Filteranordnung ist vorzugsweise vertikal im Motorraum angeordnet, kann jedoch auch eine beliebige andere, sich aus den baulichen bzw. konstruktiven Erfordernissen des jeweiligen Einsatzzwecks ergebende Anordnung bzw. Einbaulage aufweisen. Die Filteranordnung besteht aus einem Filtergehäuse 10, das zur Aufnahme eines auswechselbaren Filtereinsatzes ausgebildet ist und einen fahrzeugfest angeordneten Gehäusekopf 12 sowie einen mittels eines Verbindungselements 14 mit dem Gehäusekopf 12 lösbar verbindbaren, topfartig ausgebildeten Gehäusedeckel 16 aufweist.

Um das Abnehmen des Gehäusedeckels 16 zu erleichtern, weist dieser ein nicht dargestelltes Demontagemittel in Form einer an seinem Außenumfang angeordneten gerändelten Grifffläche und/oder eines nicht dargestellten Mehrkantbolzens zur I-neingriffnahme eines Demontagewerkzeugs auf.

An dem Gehäusekopf 12 ist ferner ein erstes Anschlusselement 18 zur Zuleitung des zu filternden bzw. verunreinigten Öls sowie ein zweites Anschlusselement 20 zur Ableitung des gefilterten bzw. gereinigten Öls ausgeformt. Die Anschlusselemente 18 und 20 weisen jeweils ein nicht dargestelltes Innengewinde zur Herstellung einer druckdichten Verbindung mit nicht dargestellten Ölleitungen des Kraftfahrzeugs auf.

Die Bestandteile des Filtergehäuses 10, insbesondere der Gehäusekopf 12 sowie der Gehäusedeckel 16, sind aus Metall oder einem geeigneten Kunststoff durch Spritzgießen hergestellt.

Fig. 2 zeigt eine Draufsicht auf das Innere eines Gehäusekopfs 12 der erfindungsgemäßen Filteranordnung bei abgenommenem Gehäusedeckel 16.

Beispielsgemäß ist das Filtergehäuse 10 zur Aufnahme eines zylindrischen Filtereinsatzes ausgebildet. Eine Vielzahl von Verriegelungselementen 22 ist entlang eines zylindrischen Innenumfangs des Gehäusekopfs 12 gleichmäßig verteilt angeordnet. Im vorliegenden Fall sind insgesamt fünf Verriegelungselemente 22 vorgesehen. Je nach Außendurchmesser des Filtereinsatzes kann es sich jedoch auch um eine beliebige andere Anzahl von Verriegelungselementen 22 handeln.

Die Verriegelungselemente 22 weisen jeweils ein Betätigungselement in Gestalt eines Betätigungsarms 26 sowie ein von dem Betätigungsarm 26 im Wesentlichen rechtwinklig in Richtung des Verbindungselements 14 ausgehendes Sperrelement in Gestalt eines Sperrarms 24 auf.

Der Betätigungsarm 26 bildet eine in das Innere des Gehäusekopfs 12 hineinragende Verlängerung, wobei der Betätigungsarm 26 im vorliegenden Fall gabelförmig ausgebildet ist und zwei freie Enden 28 und 30 mit einem jeweils umbördelten Randbereich aufweist.

Jedes der Verriegelungselemente 22 ist einstückiger Bestandteil eines aus federelastischem Material ausgebildeten Trägerelements 32, Das Trägerelement 32 weist die Gestalt eines Bands auf, entlang dessen die Verriegelungselemente 22 angeordnet sind bzw. hervorspringen. Die Verriegelungselemente 22 werden durch Ausstanzen und anschließendes Prägen eines zusammenhängenden Materialstücks hergestellt. Der Betätigungsarm 26 bildet dabei ein blattfederartiges, mithin federelastisches Rückstellmittel aus, das in entspanntem Zustand selbsttätig eine vorgegebene Sperrposition A einnimmt.

Beispielsgemäß ist das Trägerelement 32 unter Vorspannung in einer am Innenumfang des Gehäusekopfs 12 umlaufenden Nut 34 aufgenommen. Hierbei kann die Nut 34 insbesondere eine nicht dargestellte Hinterschneidung aufweisen, die zur Herstellung einer Rastverbindung mit dem Trägerelement 32 derart augeformt ist, dass eine beschädigungsfreie Demontage des Trägerelements 32 erschwert wird.

Bei dem federelastischen Material handelt es sich insbesondere um einen rostfreien oder in vergleichbarer Weise oberflächenbehandelten Federstahl.

Beispielsgemäß ist das zwischen dem Gehäusekopf 12 und dem Gehäusedeckel 16 vorgesehene Verbindungselement 14 als Schraubgewinde ausgebildet, wobei an dem Gehäusedeckel 16 eine umlaufende Gummidichtung 36 zur Herstellung einer druckdichten Verbindung mit dem Gehäusekopf 12 vorgesehen ist. Ein freies Ende 38 des Sperrarms 24 ist in der durch den entspannten Zustand des Betätigungsarms 26 vorgegebenen Sperrposition A derart gegenüber einem an dem Gehäusekopf 12 ausgebildeten Innengewinde 40 beabstandet positioniert, dass ein Zusammenschrauben des Filtergehäuses 10 blockiert wird. Genauer gesagt verdeckt der Sperrarm 24 wenigstens einen Teil der Gewindegänge des Innengewindes 40, sodass eine Eingriffnahme seitens eines an dem Gehäusedeckel 16 ausgebildeten Gegengewindes bzw. Außengewindes 42 nicht möglich ist. Alternativ kann das freie Ende 38 des Sperrarms 24 mit einer vorgegebenen Anpresekraft auf den Gewindegängen des Innengewindes 40 aufliegen.

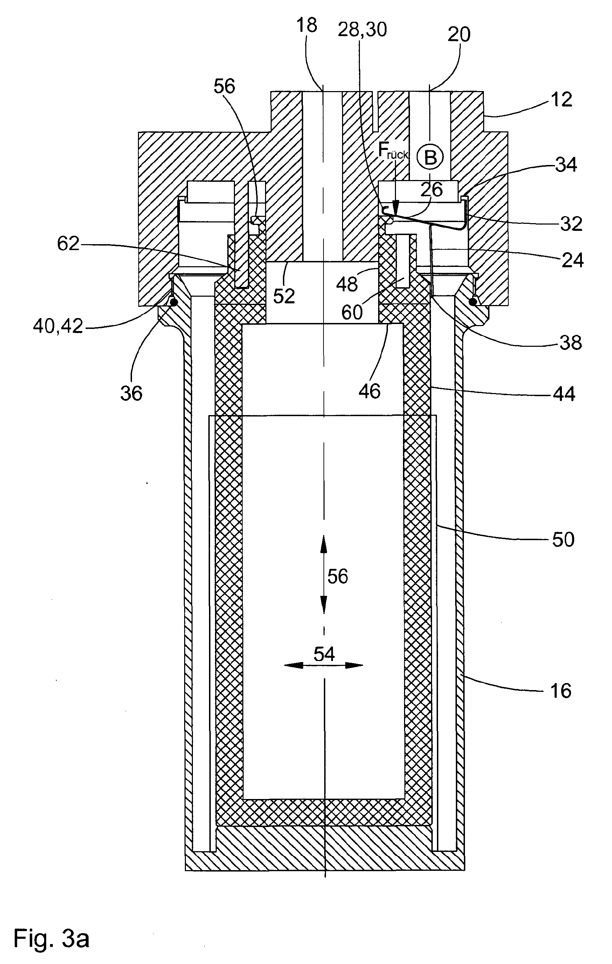

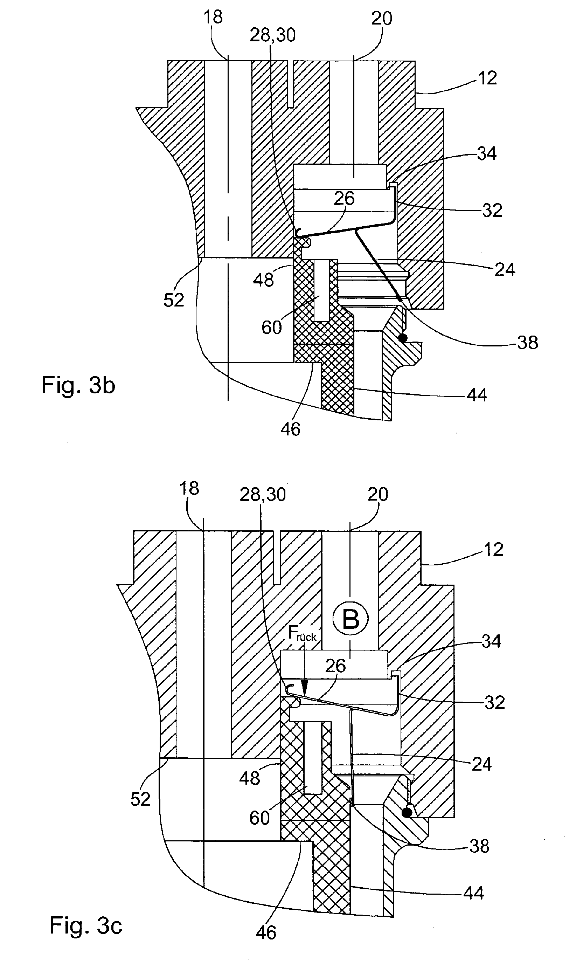

Fig. 3a zeigt eine Querschnittsansicht der erfindungsgemäßen Filteranordnung mit einem darin befindlichen Filtereinsatz 44. Des Weiteren Zeigt Fig. 3b eine Detailansicht der in Fig. 3a. wiedergegebenen erfindungsgemäßen Filteranordnung vor dem Aufschrauben des Gehäusedeckels 16 auf den Gehäusekopf 12 und Fig. 3c eine Detailansicht der in Fig. 3a wiedergegebenen erfindungsgemäßen Filteranordnung bei vollständig auf dem Gehäusekopf 12 aufgeschraubtem Gehäusedeckel 16.

Der als Wegwerfartikel konzipierte Filtereinsatz 44 weist als filteraktives Element eine nicht dargestellte zickzackförmig gefaltete, offenporige Papiermembran auf, durch die das zu filternde Öl beim Betrieb des Verbrennungsmotors hindurchtritt. Die Falten der Papiermembran werden von einem Kunststoffgewebe gestützt. Die Papiermembran ist derart gefaltet, dass diese eine zylindrische Filterkartusche bzw. - patrone bildet, wobei die Innen- und Außenweite der Papiermembran der zylindrischen Filterkartusche zur Vergrößerung der effektiven Filteroberfläche gegeneinander tordiert ist.

An einer mit der zylindrischen Filterkartusche fest verbundenen Befestigungsplatte 46 befindet sich ein Anschlussflansch 48 zur Einleitung des zu filternden bzw. verunreinigten Öls. Der Anschlussflansch 48 ist einstückiger Bestandteil der Befestigungeplatte 46 und wird aus Kunststoff durch Spritzgießen hergestellt. Das zu filternde Öl tritt während des Betriebs der Filteranordnung unter Druck stehend in radialer Richtung 54 von innen nach außen durch die Papiermembran hindurch. Die herausgefilterten Verunreinigungen verbleiben im Inneren des Filtereinsatzes 44 und können zusammen mit diesem entsorgt werden.

Der Filtereinsatz 44 wird vor dem Zusammenbau bzw. Zusammenschrauben des Filtergehäuses 10 in eine im Inneren des Filterdeckels 16 angeordnete Halterung 50 eingesetzt. Die Halterung 50 besteht aus einem perforierten Metallzylinder zur Aufnahme des Filtereinsatzes 44. Der perforierte Metallzylinder dient zugleich der mechanischen Stabilisierung bzw. Abstützung der Papiermembran beim. Hindurchtritt des unter Druck stehenden zu filternden Öls.

Ferner umfasst der Gehäusekopf 12 einen in das Innere des Filtergehäuses 10 ragenden Anschlussstutzen 52 zur Herstellung einer lösbaren Druckverbindung mit dem Filtereinsatz 44. Der Anschlussstutzen 52 übernimmt zugleich die Funktion einer Zuleitung des zu filternden Öls, wozu sich dieser mittels einer Steckkupplung mit dem Anschlussflansch 48 des Filtereinsatzes 44 flüssigkeitsdicht verbinden lässt. Das Ende des Anschlussstutzens 52 ragt in axialer Richtung 58 über die beiden freien Enden 28 und 30 des Betätigungsarms 26 in der vorgegebenen Sperrposition A hinaus, sodass der Filtereinsatz 44 beim Zusammenschrauben des Filtergehäuses 10 in radialer Richtung 54 geführt wird.

Alternativ kann die lösbare Druckverbindung anstelle einer Steckkupplung auch mittels eines Schraubgewindes hergestellt sein. In diesem Fall wird zum Zusammenbau des Filtergehäuses 10 in einem ersten Schritt der Filtereinsatz 44 mit dem Anschlussstutzen 52 des Filterkopfes 12 druckdicht verschraubt und danach in einem zweiten Schritt der Gehäusedeckel 16 mit dem Gehäusekopf 12 verbunden.

Hierbei erfolgt die Entriegelung des Verriegelungselements 22, also die Aufhebung der Blockierung des Verbindungselements 14 jeweils auf die nachfolgend beschriebene gleiche Art und Weise.

Gemäß Fig. 3a wird ein an dem Anschlussflansch 48 des Filtereinsatzes 44 ausgebildeter Randbereich 56 bei Herstellung der Druckverbindung zwischen dem Filtereinsatz 44 und dem Anschlussstutzen 52 des Filterkopfs 12 mit den umbördelten Enden 28 und 30 des Betätigungsarms 26 derart in Anlage gebracht, dass der Betätigungsarm 26 und mit diesem der Sperrarm 24 beim Aufstecken bzw. Verschrauben des Filtereinsatzes 44 unter Freigabe des an dem Gehäusekopf 12 ausgebildeten Innengewindes 40 in axialer Richtung 58 betätigt bzw. ausgelenkt wird.

Der Sperrarm 24 wird somit aus seinem entspannten Zustand und damit aus der vorgegebenen Sperrposition A entgegen einer aufgrund dessen federelastische Eigenschaften ausgeübten rückstellenden Kraft F_{rück} in eine davon abweichende Freigabeposition B überführt, in der die Blockierung des Verbindungselements 14 aufgehoben bzw. das Innengewinde 40 am Gehäusekopf 12 freigegeben und ein Zusammenschrauben von Gehäusedeckel 16 und Gehäusekopf 12 möglich ist. Gemäß Fig. 3b liegt der Sperrarm 24 in der Freigabeposition B am Außenumfang des Anschlussflansches 28 des Filtereinsatzes 44 an.

Wird andererseits die Druckverbindung zwischen dem Filtereinsatz 44 und dem Anschlussstutzen 52 des Filterkopfs 12 zum Zwecke des Austauschs des Filtereinsatzes 44 gelöst, so kehrt der Betätigungsarm 26 selbsttätig unter der Wirkung der rückstellenden Kraft F_{rück} in den entspannten Zustand und damit in die vorgegebene Sperrposition A zurück.

Zusammengefasst wirkt das Verbindungselement 14 derart mit dem Verriegelungselement 22 zusammen, dass der Gehäusedeckel 16 mit dem Gehäusekopf 12 ausschließlich dann zum Zwecke des Zusammenbaus verbindbar ist, wenn sich ein Filtereinsatz 44 in dem Filtergehäuse 10 befindet. Zum Entsperren des Verbindungselements 14 wird das Verriegelungselement 22 mittels des in dem Gehäusedeckel 16 befindlichen Filtereinsatzes 44 bei Herstellung der Druckverbindung zwischen dem Filtereinsatz 44 und dem Anschlussstutzen 52 des Gehäusekopfs 12 derart betätigt, dass die Blockierung des Verbindungselements 14 aufgehoben wird.

Gemäß Fig. 3a bis 3c weist der Anschlussflansch 48 des Filtereinsatzes 44 ferner eine umlaufende, sich in axialer Richtung 56 des Filtereinsatzes 44 erstreckende Nut 60 auf, in die eine am Gehäusekopf 12 ausgebildete und mit den Abmessungen und/oder der Anordnung der Nut 60 korrespondierende Nase 62 bei Herstellung der Druckverbindung zwischen Filtereinsatz 44 und Anschlussstutzen 52 eingreift.

Bei fehlender oder nicht korrespondierender Nut 60 ist ein Aufstecken bzw. Verschrauben des Filtereinsatzes 44 auf den bzw. mit dem Anschlussstutzen 52 des Filterkopfes 12 in axialer Richtung 58 derart blockiert, dass der Randbereich 56 des Anschlussflansches 48 nicht mit den umbördelten Enden 28 und 30 des Betätigungsarms 26 zur Anlage kommt bzw. diesen nur unzureichend aus der vorgegebenen Sperrposition A in Richtung der Freigabeposition B auszulenken vermag, ohne dass die Blockierung des Verbindungselements 14 aufgehoben wird. Ein Zusammenbau des Filtergehäuses 10 mit einem ungeeigneten Filtereinsatz 44 ist somit nicht möglich.

Mit anderen Worten bildet die dem Filtereinsatz 44 zugeordnete Nut 60 nach dem Prinzip von Schlüssel und Schloss" ein erstes Sicherheitsmerkmal und die dem Filterkopf 12 zugeordnete Nase 62 ein zweites Sicherheitsmerkmal, wobei sich der Filtereinsatz 44 mit dem Anschlussstutzen 52 des Filterkopfs 12 ausschließlich dann verbinden lässt, wenn das erste und das zweite sicherheitsmerkmal miteinander korrespondierende mechanische Eigenschaften aufweisen.

## Patentansprüche

1. Filteranordnung zum Filtern eines flüssigen oder gasförmigen Mediums, mit einem Filtergehäuse, das zur Aufnahme eines auswechselbaren zylindrischen Filtereinsatzes (44) ausgebildet ist, wobei das Filtergehäuse einen Gehäusekopf (12) und einen mittels eines Verbindungselements (14) mit dem Gehäusekopf (12) lösbar verschraubbaren Gehäusedeckel (16) aufweist, wobei ein dem Gehäusekopf (12) zugeordnetes Verriegelungselement (22) ein Betätigungselement-in Gestalt eines Betätigungsarms (26) sowie ein von dem Betätigungsarm (26) im Wesentlichen rechtwinklig in Richtung des Verbindungselements (14) ausgehendes Sperrelement in Gestalt eines Sperrarms (24) aufweist, wobei ein an einem Anschlussflansch (48) des Filtereinsatzes (44) ausgebildeter Randbereich (56) bei Herstellung einer Druckverbindung zwischen dem Filtereinsatz (44) und einem Anschlussstutzen (52) des Filterkopfs (12) mit dem Betätigungsarm (26) derart in Anlage gebracht wird, dass der Betätigungsarm (26) und mit diesem der Sperrarm (24) beim Aufstecken bzw. Verschrauben des Filtereinsatzes (44) unter Freigabe eines an dem Gehäusekopf (12) ausgebildeten Innengewindes (40) in axialer Richtung (58) betätigt bzw. ausgelenkt wird, sodass der Gehäusedeckel (16) mit dem Gehäusekopf (12.) ausschließlich dann zum Zwecke des Zusammenbaus verschraubbar ist, wenn sich der Filtereinsatz (44) in dem Filtergehäuse befindet, **dadurch gekennzeichnet, dass** der mit dem Sperrarm (24) zusammenwirkende Betätigungsarm (26) ein blattfederartiges, mithin federelastisches Rückstellmittel ausbildet, das in entspanntem Zustand bei Fehlen des Filtereinsatzes (44) im Filtergehäuse selbsttätig eine vorgegebene Sperrposition (A) einnimmt, in der das Sperrelement (24) einen Zusammenbau des Filtergehäuses blockiert.

2. Filteranordnung nach Anspruch 1, **dadurch gekennzeichnet, dass** das Sperrelement (24) bei im Filtergehäuse (10) befindlichem Filtereinsatz (44) eine von der vorgegebenen Sperrposition (A) abweichende Freigabeposition (B) einnimmt, in der die Blockierung des Verbindungselements (14) aufgehoben ist.

3. Filteranordnung nach Anspruch 2, **dadurch gekennzeichnet, dass** das Sperrelement (24) aus der vorgegebenen Sperrposition (A) in die Freigabeposition (B) überführt wird, wenn die Druckverbindung zwischen dem Filtereinsatz (44) und dem Anschlussstutzen (52) hergestellt wird.

4. Filteranordnung nach Anspruch 3, **dadurch gekennzeichnet, dass** das Sperrelement (24) beim Lösen der Druckverbindung zwischen dem Filtereinsatz (44) und dem Anschlussstutzen (52) selbsttätig in die vorgegebene Sperrposition (A) zurückkehrt.

5. Filteranordnung nach einem der Ansprüche 2 bis 4, **dadurch gekennzeichnet, dass** (26)der Filtereinsatz (44) mit dem Betätigungselement (26) derart in Anlage gebracht wird, dass das Sperrelement (24) bei Herstellung der Druckverbindung zwischen dem Filtereinsatz (44) und dem Anschlussstutzen (52) aus der vorgegebenen Sperrposition (A) in die Freigabeposition (B) überführt wird.

6. Filteranordnung nach einem der Ansprüche 1 bis 5, **dadurch gekennzeichnet, dass** das Betätigungselement (26) gabelförmig ausgebildet ist und/oder ein freies Ende (28, 30) mit einem umbördelten Randbereich zur Anlage an dem Filtereinsatz (44) aufweist.

7. Filteranordnung nach einem der Ansprüche 1 bis 6, **dadurch gekennzeichnet, dass** es sich bei dem Verbindungselement (14) um ein Schraubgewinde handelt, wobei ein freies Ende (38) des Sperrelements (24) in der vorgegebenen Sperrposition (A) derart gegenüber dem am Gehäusekopf (12) ausgebildeten Innengewinde (40) des Schraubgewindes positioniert ist, dass ein Zusammenschrauben des Filtergehäuses (10) blockiert wird.

8. Filteranordnung nach Anspruch 7, **dadurch gekennzeichnet, dass** das freie Ende (38) des Sperrelements (24) entweder unmittelbar, insbesondere mit einer vorgegebenen Anpresskraft, auf wenigstens einem Teil der Gewindegänge des Innengewindes (40) aufliegt oder aber eine davon beabstandete Position aufweist.

9. Filteranordnung nach einem der Ansprüche 1 bis 8, **dadurch gekennzeichnet, dass** das Trägerelement (32) in einer am Innenumfang des Gehäusekopfs (12) ausgebildeten Nut (34) aufgenommen ist.

10. Filteranordnung nach einem der Ansprüche 1 bis 9, **dadurch gekennzeichnet, dass** es sich bei dem Filtereinsatz (44) um einen Ölfilter, einen Kraftstofffilter, einen Hydraulikflüssigkeitsfilter oder einen Luftfilter eines Kraftfahrzeugs handelt.

11. Verfahren zum Entriegeln eines Verbindungselements einer Filteranordnung zum Filtern eines flüssigen oder gasförmigen Mediums nach einem der Ansprüche 1 bis 10, bei dem ein Verriegelungselement (24) mittels eines Filtereinsatzes (44) bei Herstellung einer lösbaren Druckverbindung zwischen dem Filtereinsatz (44) und einem an dem Gehäusekopf (12) ausgebildeten Anschlussstutzen (52) derart betätigt wird, dass die Blockierung des Verbindungselements (14) aufgehoben wird.

12. Verwendung einer Filteranordnung nach einem der Ansprüche 1 bis 10 in einem Kraftfahrzeug, insbesondere in einem landwirtschaftlichen Kraftfahrzeug.

## Claims

1. Filter arrangement for filtering a liquid or gaseous medium, with a filter housing which is formed for receiving an interchangeable filter insert (44), wherein the filter housing has a housing head (12) and a housing cover (16) which can be releasably screwed to the housing head (12) by means of a connecting element (14), wherein a locking element (22) assigned to the housing head (12) has an actuating element in the form of an actuating arm (26) and a blocking element which emerges substantially at a right angle from the actuating arm (26) in the direction of the connecting element (14) and is in the form of a blocking arm (24), wherein, when a pressure connection is produced between the filter insert (44) and a connecting piece (52) of the filter head (12), an edge region (56) formed on a connecting flange (48) of the filter insert (44) is brought into contact with the actuating arm (26) in such a manner that, when the filter insert (44) is pushed on or screwed, with an internal thread (40) formed on the housing head (12) being released, the actuating arm (26) and, with the latter, the blocking arm (24) is actuated and deflected in the axial direction (58) such that the housing cover (16) is screwable to the housing head (12), for the purpose of assembly, only if the filter insert (44) is located in the filter housing, **characterized in that** the actuating arm (26) interacting with the blocking arm (24) forms a restoring means which is in the manner of a leaf spring and is consequently spring-elastic, said restoring means, in the relaxed state when the filter insert (44) is missing in the filter housing, automatically takes up a predetermined blocking position (A) in which the blocking element (24) blocks assembly of the filter housing.

2. Filter arrangement according to Claim 1, **characterized in that**, when a filter insert (44) is located in the filter housing (10), the blocking element (24) takes up a release position (B) which differs from the predetermined blocking position (A) and in which blocking of the connecting element (14) is canceled.

3. Filter arrangement according to Claim 2, **characterized in that** the blocking element (24) is transferred from the predetermined blocking position (A) into the release position (B) when the pressure connection is produced between the filter insert (44) and the connecting piece (52).

4. Filter arrangement according to Claim 3, **characterized in that**, upon release of the pressure connection between the filter insert (44) and the connecting piece (52), the blocking element (24) returns automatically into the predetermined blocking position (A).

5. Filter arrangement according to one of Claims 2 to 4, **characterized in that** the filter insert (44) is brought into contact with the actuating element (26) in such a manner that, when the pressure connection is produced between the filter insert (44) and the connecting piece (52), the blocking element (24) is transferred from the predetermined blocking position (A) into the release position (B).

6. Filter arrangement according to one of Claims 1 to 5, **characterized in that** the actuating element (26) is of fork-shaped design and/or has a free end (28, 30) with a crimped border region for contact with the filter insert (44).

7. Filter arrangement according to one of Claims 1 to 6, **characterized in that** the connecting element (14) is a screw thread, a free end (38) of the blocking element (24) in the predetermined blocking position (A) being positioned in relation to the internal thread (40), which is formed on the housing head (12), of the screw thread in such a manner that screwing together of the filter housing (10) is blocked.

8. Filter arrangement according to Claim 7, **characterized in that** the free end (38) of the blocking element (24) either rests directly, in particular with a predetermined press-on force, on at least some of the turns of the internal thread (40) or has a position spaced apart therefrom.

9. Filter arrangement according to one of Claims 1 to 8, **characterized in that** the support element (32) is held in a groove (34) formed on the inner circumference of the housing head (12).

10. Filter arrangement according to one of Claims 1 to 9, **characterized in that** the filter insert (44) is an oil filter, a fuel filter, a hydraulic fluid filter or an air filter of a motor vehicle.

11. Method for unlocking a connecting element of a filter arrangement for filtering a liquid or gaseous medium according to one of Claims 1 to 10, in which, where a releasable pressure connection is produced between the filter insert (44) and a connecting piece (52) formed on the housing head (12), a locking element (24) is actuated by means of a filter insert (44) in such a manner that the blocking of the connecting element (14) is canceled.

12. Use of a filter arrangement according to one of Claims 1 to 10 in a motor vehicle, in particular in an agricultural motor vehicle.

## Revendications

1. Système de filtre pour filtrer un fluide liquide ou gazeux, comprenant un boîtier de filtre qui est réalisé pour recevoir un insert de filtre cylindrique remplaçable (44), le boîtier de filtre présentant une tête de boîtier (12) et un couvercle de boîtier (16) vissable de manière amovible à la tête de boîtier (12) au moyen d'un élément de connexion (14), un élément de verrouillage (22) associé à la tête de boîtier (12) présentant un élément d'actionnement sous la forme d'un bras d'actionnement (26) ainsi qu'un élément de blocage sous la forme d'un bras de blocage (24), partant du bras d'actionnement (26) essentiellement à angle droit dans la direction de l'élément de connexion (14), une région de bord (56) réalisée au niveau d'une bride de raccordement (48) de l'insert de filtre (44) étant amenée en appui contre le bras d'actionnement (26) lors de l'établissement d'une connexion par pression entre l'insert de filtre (44) et une tubulure de raccordement (52) de la tête de filtre (12), de telle sorte que le bras d'actionnement (26), et avec lui, le bras de blocage (24), lors de l'enfichage ou du vissage de l'insert de filtre (44), soit actionné ou dévié dans la direction axiale (58) en libérant un filetage interne (40) réalisé sur la tête de boîtier (12), de telle sorte que le couvercle de boîtier (16) puisse être vissé à la tête de boîtier (12) exclusivement dans le but de réaliser l'assemblage, lorsque l'insert de filtre (44) se trouve dans le boîtier de filtre, **caractérisé en ce que** le bras d'actionnement (26) coopérant avec le bras de blocage (24) constitue un moyen de rappel de type à ressort à lame, et donc élastique à ressort, qui, dans l'état détendu, en l'absence de l'insert de filtre (44), adopte dans le boîtier de filtre automatiquement une position de blocage prédéfinie (A), dans laquelle l'élément de blocage (24) bloque un assemblage du boîtier de filtre.

2. Système de filtre selon la revendication 1, **caractérisé en ce que** l'élément de blocage (24), lorsque l'insert de filtre (44) se trouve dans le boîtier de filtre (10), adopte une position de libération (B) s'écartant de la position de blocage (A) prédéfinie, dans laquelle position de libération le blocage de l'élément de connexion (14) est supprimé.

3. Système de filtre selon la revendication 2, **caractérisé en ce que** l'élément de blocage (24) est transféré de la position de blocage (A) prédéfinie dans la position de libération (B) lorsque la connexion par pression entre l'insert de filtre (44) et la tubulure de raccordement (52) est établie.

4. Système de filtre selon la revendication 3, **caractérisé en ce que** l'élément de blocage (24), lors de la libération de la connexion par pression entre l'insert de filtre (44) et la tubulure de raccordement (52), revient automatiquement dans la position de blocage (A) prédéfinie.

5. Système de filtre selon l'une quelconque des revendications 2 à 4, **caractérisé en ce que** l'insert de filtre (44) est amené en appui avec l'élément d'actionnement (26) de telle sorte que l'élément de blocage (24), lors de l'établissement de la connexion par pression entre l'insert de filtre (44) et la tubulure de raccordement (52), soit transféré de la position de blocage (A) dans la position de libération (B).

6. Système de filtre selon l'une quelconque des revendications 1 à 5, **caractérisé en ce que** l'élément d'actionnement (26) est réalisé en forme de fourche et/ou présente une extrémité libre (28, 30) avec une région de bord repliée pour l'appui contre l'insert de filtre (44).

7. Système de filtre selon l'une quelconque des revendications 1 à 6, **caractérisé en ce que** l'élément de connexion (14) est un filetage de vis, une extrémité libre (38) de l'élément de blocage (24) étant positionnée dans la position de blocage (A) prédéfinie par rapport au filetage interne (40) du filetage de vis réalisé sur la tête de boîtier (12) de telle sorte qu'un vissage d'assemblage du boîtier de filtre (10) soit bloqué.

8. Système de filtre selon la revendication 7, **caractérisé en ce que** l'extrémité libre (38) de l'élément de blocage (24) soit repose directement, notamment avec une force de pressage prédéfinie, sur au moins une partie des pas de filetage du filetage interne (40), soit présente toutefois une position espacée de celui-ci.

9. Système de filtre selon l'une quelconque des revendications 1 à 8, **caractérisé en ce que** l'élément de support (32) est reçu dans une rainure (34) réalisée sur la périphérie interne de la tête de boîtier (12).

10. Système de filtre selon l'une quelconque des revendications 1 à 9, **caractérisé en ce que** l'insert de filtre (44) est un filtre à huile, un filtre à carburant, un filtre de liquide hydraulique, ou un filtre à air d'un véhicule automobile.

11. Procédé de déverrouillage d'un élément de connexion d'un système de filtre pour filtrer un fluide liquide ou gazeux selon l'une quelconque des revendications 1 à 10, dans lequel un élément de verrouillage (24) est actionné au moyen d'un insert de filtre (44) lors de l'établissement d'une connexion par pression amovible entre l'insert de filtre (44) et une tubulure de raccordement (52) réalisée sur la tête de boîtier (12), de telle sorte que le blocage de l'élément de connexion (14) soit supprimé.

12. Utilisation d'un système de filtre selon l'une quelconque des revendications 1 à 10 dans un véhicule automobile, notamment dans un véhicule automobile agricole.
